**Europäisches Patentamt**

**European Patent Office**

**Office européen des brevets**

(19)

(11) Veröffentlichungsnummer: **0 243 696**
**A1**

# (12) EUROPÄISCHE PATENTANMELDUNG

(21) Anmeldenummer: **87104679.3**

(22) Anmeldetag: **30.03.87**

(51) Int. Cl.⁴: **G11B 15/467** , G11B 15/18 , G11B 15/02

(30) Priorität: **16.04.86 DE 3612746**

(43) Veröffentlichungstag der Anmeldung:
**04.11.87 Patentblatt 87/45**

(84) Benannte Vertragsstaaten:
**AT BE CH DE FR GB IT LI LU NL SE**

(71) Anmelder: **Deutsche Thomson-Brandt GmbH**
**Hermann-Schwer-Strasse 3 Postfach 2060**
**D-7730 Villingen-Schwenningen(DE)**

(72) Erfinder: **Kaaden, Jürgen**
**Im Tannhörnle 10**
**D-7730 VS-Villingen(DE)**
Erfinder: **Link, Hermann**
**Augenmoosstrasse 10**
**D-7730 VS-Obereschach(DE)**

(54) **Videorekorder.**

(57) Ein Videorecorder mit rotierendem Kopfrad mit einem Kopfpaar und Übertrager, der eingerichtet ist für die Aufnahme bei Standard-Bandgeschwindigkeit, ist nicht in der Lage "Long-Play"-Aufnahmen eines entsprechend dafür ausgestatteten Komfort-Gerätes abzutasten und wiederzugeben. Wenn aber dafür gesorgt wird, daß ein solches einfacheres Gerät die Kenn-Impulse der Aufzeichnung erfaßt und entsprechende Servoschaltungen für die zweite Bandgeschwindigkeit umsteuert und gleichzeitig automatisch bestimmte Anpassungen bewirkt, dann kann mit der vorhandenen Videosignalverarbeitungsschaltung eine gute Wiedergabe erzielt werden ohne ein zweites Kopfpaar und ohne zweiten Übertrager. Insbesondere. wenn das Gerät die Servoschaltungen in einem µC enthält, läßt sich diese Lösung praktisch ohne Mehrkosten realisieren.

EP 0 243 696 A1

## Videorecorder

Die Erfindung betrifft einen Videorecorder gemäß dem Oberbegriff des ersten Anspruchs.

In der VHS-Norm sind seit einigen Jahren verschiedene Aufzeichnungs-und Wiedergabe-Bandgeschwindigkeiten festgeschrieben. Weitverbreitet sind "Standard-Play" und "Long-Play", letztere mit halber Standard-Bandgeschwindigkeit. Im videofrequenten Bereich ist jeder Bandgeschwindigkeit ein Kopfpaar zugeordnet. Videorecorder für zwei Bandgeschwindigkeiten müssen demgemäß zwei Kopfpaare besitzen. Das garantiert eine hochwertige Wiedergabequalität. Um solche Geräte zu bauen, werden alle Schaltungsstufen, wie Kopfverstärker, Köpfe und Servoschaltung auf die beiden Bandgeschwindigkeiten abgestimmt, so daß Aufnahmen und Wiedergaben mit diesen Geräten vorgenommen werden können.

Es gibt jedoch auch einfache Geräte, die nur für eine Bandgeschwindigkeit ("Standard-Play") ausgelegt sind und deshalb solche Aufnahmen der exklusiveren Geräte, die mit der langsameren Bandgeschwindigkeit aufgenommen wurden, nicht wiedergeben können.

Für den Besitzer eines derartigen, billigeren Gerätes ist es jedoch wünschenswert, diese "Long-Play"-Aufnahmen ebenfalls wiedergeben zu können.

Der Erfindung lag somit die Aufgabe zu grunde, bei geringstem Kostenaufwand einen Weg zu finden, die billigeren Videorecorder dahingehend zu verbessern, daß sie auch "Long-Play"-Aufnehmen wiedergeben können.

Diese Aufgabe wird für Videorecorder gemäß dem Oberbegriff des ersten Anspruchs erfindungsgemäß nach seinem Kennzeichen gelöst.

Weitere Einzelheiten sind den Unteransprüchen zu entnehmen.

Die exklusiven Geräte zeichnen bei "Long-Play"-Aufnahmen gleichzeitig genormte Kenn-Impulse für diese Geschwindigkeit mit auf, die bei der Wiedergabe solcher Aufnahmen mit diesen Geräten die Servoschaltung steuern und notwendige Anpassungsumschaltungen und -entzerrungen vornehmen.

Es hat sich gezeigt, daß "Long-Play"-Aufnahmen auch auf den billigeren Geräten mit befriedigender Wiedergabequalität dann abgetastet werden können, wenn für eine automatische Umsteuerung der Servoschaltung gesorgt wird und gleichzeitig automatisch Anpassungen vorgenommen werden. Das Servoteil ist so ausgelegt, daß die Aufnahme-Bandgeschwindigkeit durch die Kenn-Impulse automatisch bei Wiedergabe richtig erkannt wird.

Die Erfindung geht also von der Erkenntnis aus, daß eine Abtastung der Informationen einer mit halber Band-Geschwindigkeit erfolgten Aufnahme ohne weiteres mit den normalen "Standard-Play"-Köpfen möglich ist, wenn die Relativgeschwindigkeiten zwischen Kopf und Band bei Aufnahme und Wiedergabe gleich sind.

Deshalb wird ein erfindungsgemäßer Videorecorder mit einer Servoschaltung ausgestattet, die eine automatische Erkennung der Aufzeichnungsgeschwindigkeit durchführt.Sie nimmt automatisch entsprechende Umsteuerungen vor hinsichtlich der Bandgeschwindigkeit den Entzerrungen und Anpassungen. Sie bewirkt z.B. Zeitanpassungen beim Kopfschaltsignal. Die Videosignalschaltungen sind nur für eine Bandgeschwindigkeit erforderlich, ebenso ist nur ein Kopfpaar samt Übertrager notwendig.

Die Erfindung läßt sich insbesondere dann vorteilhaft anwenden, wenn die Servoschaltung in einem Mikro-Computer konzentriert sind, und dieser in zwei verschiedenen Versionen für beide Gerätearten bei gleicher Software vorhanden ist und somit bei gleichem Preis und ohne sonstigem Mehraufwand die beschriebene Aufgabe erfüllen kann. Die vom Bedienteil oder von den µC-pins ermittelten Informationen reichen dann aus, um die angeschlossene Elektronik für die geforderten Funktionen richtig auszusteuern.

Bei Aufnahme ist das billigere Gerät selbstverständlich auf die Bandgeschwindigkeit geschaltet, für die das Videosignalteil optimiert ist, nämlich "Standard-Play".

Die beschriebenen Vorteile lassen einen Nachteil, der nicht so wichtig ist, akzeptieren. Während die exklusiven Geräte den Standbild-Mode auch bei "Long-Play" als Komfort bieten, läßt sich das bei der erfindungsgemäßen Ausstattung von billigeren Geräten nicht durchführen. Die Köpfe würden über die nächste benachbarte Aufzeichnungsspur hinaus während einer Kopfumdrehung anschließende Spuren, die wiederum mit gleichem Azimutwinkel aufgezeichnet wurden. erfassen. Die Folgen wären störende Synchronisationsfehler.

## Ansprüche

1. Videorecorder mit rotierendem Kopfrad mit einem Kopfpaar und Übertrager, eingerichtet für die Aufnahme bei Standard-Bandgeschwindigkeit, **dadurch gekennzeichnet**, daß die Anzahl der Köpfe und der Schaltungsaufwand für die Video-Signalverarbeitung für die Wiedergabe bei Standard-Bandgeschwindigkeit ausgelegt ist, die Servokreise jedoch für mindestens eine weitere Bandgeschwindigkeit eingerichtet sind.

2. Videorecorder nach Anspruch 1, **dadurch gekennzeichnet**, daß eine Einrichtung zum Lesen und Auswerten von bei der Aufnahme mit aufgezeichneten Kenn-Impulsen vorgesehen ist, die die Bandgeschwindigkeit der Aufnahme kennzeichnen.

3. Videorecorder gemäß Anspruch 1, **dadurch gekennzeichnet**, daß die Servokreise von der Auswertung der Kenn-Impulse automatisch gesteuert werden und gleichzeitig die automatische An- und/oder Umschaltung von Schaltungsstufen zum Entzerren und zum Ändern des Frequenzgangs und von Schaltzeiten im Videosignalweg dann vorgenommen werden, wenn aus den Kenn-Impulsen festgestellt wird, daß die wiederzugebende Aufzeichnung nicht mit der Standard-Bandgeschwindigkeit aufgezeichnet wurde.

4. Videorecorder gemäß Anspruch 3, **dadurch gekennzeichnet**, daß alle Maßnahmen zum Erkennen der Bandgeschwindigkeit der Aufnahme, zum Steuern der Servokreise sowie zum An-und/oder Umschalten der Entzerrung und Änderung des Frequenzgangs und der Schaltzeiten im Videosignalweg in der Programmierung eines Mikro-Computers festgelegt sind.

5. Videorecorder gemäß Anspruch 4, **dadurch gekennzeichnet**, daß der Mikro-Computer bei Aufnahme automatisch veranlaßt, daß die Standard-Bandgeschwindigkeit gewählt wird, für die der Videorecorder im Video-Signalteil dimensioniert ist.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol. 6, no. 79 (P-115)[957], 28th May 1982; & JP-A-57 15 237 (SONY K.K.) 26-01-1982 * Abstract; Figure * | 1,2 | G 11 B 15/467<br>G 11 B 15/18<br>G 11 B 15/02 |
| Y | Idem | 3,4 | |
| | --- | | |
| X | PATENT ABSTRACTS OF JAPAN, vol. 3, no. 90 (E-127) 31st July 1979, page 77 E 127; & JP-A-54 68 613 (MITSUBISHI DENKI K.K.) 06-01-1979 * Abstract; figure * | 1,2 | |
| Y | Idem | 3,4 | |
| | --- | | **TECHNICAL FIELDS SEARCHED (Int. Cl.4)** |
| A | EP-A-0 081 802 (HITACHI) * Page 3, lines 10-13; page 67, line 12 - page 71, line 18; figures 30,31 * | 1,2 | G 11 B |
| | --- | | |
| A | AT-B- 364 176 (HERZOG HERWIG) * Page 2, lines 35-53; figures 1,2 * | 4,5 | |
| | --- | | |
| A | DE-A-3 216 027 (MITSUBISHI DENKI) | | |
| | ----- | | |

The present search report has been drawn up for all claims

| Place of search | Date of completion of the search | Examiner |
|---|---|---|
| THE HAGUE | 23-07-1987 | DEVERGRANNE C.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82